(19) Europäisches Patentamt
European Patent Office
Office européen des brevets

(11) Veröffentlichungsnummer: **0 026 399**
B1

(12) # EUROPÄISCHE PATENTSCHRIFT

(45) Veröffentlichungstag der Patentschrift: **14.03.84**

(51) Int. Cl.³: **B 01 D 13/04**, C 08 J 5/22

(21) Anmeldenummer: **80105569.0**

(22) Anmeldetag: **17.09.80**

(54) **Poröse, semipermeable, mit ionisierbaren Gruppen modifizierte Celluloseacetatmembranen, Verfahren zu ihrer Herstellung und ihre Verwendung.**

(30) Priorität: **19.09.79 CH 8460/79**

(43) Veröffentlichungstag der Anmeldung: **08.04.81 Patentblatt 81/14**

(45) Bekanntmachung des Hinweises auf die Patenterteilung: **14.03.84 Patentblatt 84/11**

(84) Benannte Vertragsstaaten: **BE CH DE FR GB IT LI**

(56) Entgegenhaltungen:
**DE - A - 2 505 255**
**DE - A - 2 522 821**
**DE - A - 2 855 775**
**FR - A - 2 298 570**
**GB - A - 1 161 513**
**US - A - 3 723 306**
**US - A - 3 857 782**
**US - A - 3 872 001**

**INDUSTRIAL AND ENGINEERING CHEMISTRY, Process design and development, Band 11, Nr. 2, April 1972, Seiten 226-228 Washington, D.C., U.S.A. E. HOFFER et al.: "Ion Separation by Hyperfiltration Through Charged Membranes. II. Separation Performance of Collodion-Polybase Membranes"**

(73) Patentinhaber: **ALIGENA AG, Postfach, CH-4001 Basel (CH)**

(72) Erfinder: **Linder, Charles, Dr., 20 Derech Yavneh, Rehovot (IL)**
Erfinder: **Perry, Mordechai, Dr., 32 Sokolov Street, Petach Tikvah (LI)**

(74) Vertreter: **Zumstein, Fritz sen., Dr. et al, Bräuhausstrasse 4, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 026 399 B1

# Poröse, semipermeable, mit ionisierbaren Gruppen modifizierte Celluloseacetatmembranen, Verfahren zu ihrer Herstellung und ihre Verwendung

Die vorliegende Erfindung betrifft verbesserte semipermeable Membranen, die in Diffusionsverfahren, wie z. B. Umkehrosmose (RO)- oder Ultrafiltrationsverfahren (UF) eingesetzt werden können Insbesondere betrifft die vorliegende Erfindung chemisch modifizierte Celluloseacetat-Membranen mit verbesserter Durchlässigkeit (Durchflußvermögen, Flux) sowie verbessertem Rückhaltevermögen und damit insgesamt verbesserte Trennleistung.

RO-Membranen sind dichte Membranen mit Porendurchmessern von 1 bis 15 Å, welche niedermolekulare Salze, wie z. B. Natriumchlorid, wirkungsvoll zurückhalten, und zwar zu mehr als 50% oder vorzugsweise zu mehr als 90%. UF-Membranen haben größere Porendurchmesser und das Rückhaltevermögen für die gleichen niedermolekularen Salze beträgt weniger als 10%. Indem aber diese Definitionen eher willkürlich sind, kann es auch Membranen mit Porendurchmessern geben, die ein Rückhaltevermögen für Natriumchlorid von weniger als 50% und mehr als 10% aufweisen. Derartige Membranen werden zwischen den RO- und UF-Membranen eingeteilt.

Die erfindungsgemäßen Membranen können entweder als UF-Membranen und/oder als UF—RO-Zwischenmembranen betrachtet werden.

Es ist bereits bekannt, Celluloseacetat enthaltende Membranen in Umkehrosmoseverfahren, z. B. bei der Wasserentsalzung oder der Abwasserbehandlung (Reinigung), einzusetzen (US-A-3 497 072 und 3 593 855).

Mit ionischen Verbindungen chemisch modifizierte Celluloseacetatmembranen sind ferner aus der FR-A-2 298 570 bekannt.

Die geringe mechanische und chemische Stabilität dieser (modifizierten) Celluloseacetatmembranen beschränkt allerdings ihren Einsatz auf einen engen Temperatur- und pH-Wertbereich. Ferner weisen diese Membranen auf Celluloseacetatbasis in der Regel nur ein geringes Durchflußvermögen (Flux) auf, wenn mit ihnen ein guter Rückhalt erreicht wird. Weiterhin sind diese Membranen in organischen Lösungsmitteln löslich und werden unter hohen Drücken zusammengepreßt (geringe Widerstandskraft beim Einsatz hoher Drücke).

Diese Nachteile können weitgehend überwunden werden, wenn man die erfindungsgemäß modifizierten Celluloseacetatmembranen — wie sie nachfolgend beschrieben werden — verwendet.

Gegenstand der vorliegenden Erfindung sind daher neue poröse, semipermeable, mit ionisierbaren Gruppen modifizierte Celluloseacetatmembran, dadurch gekennzeichnet, daß sie aus

a) einer Celluloseacetat enthaltenden Membran (Komponente (A)) besteht, die vor der Modifikation an der Oberfläche Poren mit einem Durchmesser von 10 bis 1000 Å aufweist, an die über
b) mindestens ein Brückenglied, abgeleitet von einer organischen Verbindung Komponente (B)) mit mindestens 2 funktionellen Gruppen,
c) mindestens ein polyfunktionelles, lineares oder verzweigtes Oligomer oder Polymer (Komponente (C)) gebunden ist, welches seinerseits mit
d) ionisierbaren Gruppen enthaltenden Verbindungen (Komponente (D)) weiter umgesetzt ist.

Die Ausgangsmembran (A) besitzt wie angegeben vor der genannten Modifikation an der Oberfläche Poren mit einem Durchmesser von 10 bis 1000, vorzugsweise 10 bis 500 Å.

Die erfindungsgemäßen Membranen sind poröse, modifizierte Celluloseacetatmembranen mit solchen Porendurchmessern, daß sie z. B. für niedermolekulare Salze von einwertigen Ionen (Natriumchlorid) durchlässig sind, mehrwertige Ionen mit relativ niedrigen und natürlich auch solchen mit hohen Molekulargewichten (letztere können auch einwertig sein) aber zurückhalten, ebenso wie sie auch nichtionische Verbindungen zurückhalten können.

Die erfindungsgemäßen Membranen können symmetrisch oder asymmetrisch sein und sich gegebenenfalls auf einem Träger befinden (Dicke der Membranen: 100 bis 500 µm) oder dünne Schichten auf einem porösen Trägermaterial als Teil einer Kompositmembran sein (Dicke der Membranen: 0,5 bis 10 µm). Die Porendurchmesser der nicht-modifizierten Celluloseacetatmembranen haben die Werte wie oben angegeben, vorzugsweise liegen sie zwischen 10 und 200 Å, sowie insbesondere zwischen 10 und 120 Å bzw. 10 und 70 Å.

So können z. B. zwei Celluloseacetatmembranen mit unterschiedlicher Porengröße und damit verschiedenen Rückhaltevermögen für einen vorgegebenen gelösten Stoff, z. B. 40 und 20%, nach der erfindungsgemäßen Modifikation ein deutlich höheres und fast gleiches Rückhaltevermögen (z. B. über 98%) für diesen Stoff aufweisen.

Weitere Gegenstände der vorliegenden Erfindung sind die Verfahren zur Herstellung der erfindungsgemäßen Membranen, die sich gegebenenfalls auf einem Träger befinden können, sowie ein Verfahren zur Herstellung von Kompositmembranen, die auf einer Oberfläche eines mikroporösen Trägers einen dünnen Film mit semipermeablen Eigenschaften aus modifiziertem Celluloseacetat (wie oben beschrieben) enthalten.

Ein weiterer Gegenstand der vorliegenden Erfindung ist die Verwendung der erfindungsgemäßen Membranen zur Aufkonzentrierung und/oder Reinigung von Flüssigkeiten (Lösungen) z. B. zur

Trennung von anorganischen Salzen von organischen Verbindungen (z. B. Farbstoffen) oder zur Behandlung (Reinigung) von Abwässern.

Die Verwendung der Membranen erfolgt in der Regel so, daß man die zu trennenden Flüssigkeiten (Lösungen) auf eine Seite der Membran bringt und dann unter Anwendung eines hydraulischen Drucks, der größer als der osmotische Druck der Lösung ist, die Lösung einer Ultrafiltration (Umkehrosmose) unterwirft.

Auf diese und weitere Gegenstände der vorliegenden Erfindung wird in der nachfolgenden Beschreibung ausführlich eingegangen.

Das Verfahren zur Herstellung der erfindungsgemäßen Membranen erfolgt durch Modifikation von UF- oder RO—UF-Celluloseacetatmembranen durch eine Folge von verschiedenen Reaktionsschritten.

Das Verfahren ist dadurch gekennzeichnet, daß man

(a) eine Celluloseacetat enthaltende Membran (Komponente (A)), die an der Oberfläche Poren mit einem Durchmesser von 10—1000 Å aufweist, mit
(b) einer organischen Verbindung (Komponente (B)) mit mindestens einer Gruppe, die mit den Hydroxylgruppen der Membran reagiert und mindestens einer Gruppe, die mit der Komponente (C) reagiert, umsetzt, wobei so verfahren wird, daß das Umsetzungsprodukt aus den Komponenten (A) und (B) mindestens noch eine reaktionsfähige Gruppe aufweist, dann mit
(c) einem polyfunktionellen linearen oder verzweigten Oligomer oder Polymer (Komponente (C)) und anschließend
(d) einer Verbindung (Komponente (D)) umsetzt, die mindestens eine ionische Gruppe und mindestens eine Gruppe, die mit der Komponente (C) reagiert, enthält.

Dieses zuvor beschriebene Verfahren wird allgemein zur Herstellung von sogenannten selbsttragenden Membranen und zur Herstellung von relativ dicken Membranen, die sich auf einem Trägermaterial befinden, angewandt.

Im einzelnen umfaßt das Verfahren die chemischen Reaktionen von (A) mit (B), dann mit (C) und (D).

Mit diesem Verfahren ist es möglich, modifizierte Celluloseacetatmembranen herzustellen, deren Porendurchmesser einen deutlich größeren Bereich umfassen als dies bis anhin möglich war, so daß die erhaltenen Membranen unabhängig von den Porendurchmessern der Ausgangsmembran für einen vorgegebenen gelösten Stoff ein hohes Zurückhaltevermögen aufweisen.

Dies wird dadurch erreicht, daß man das Verhältnis der geladenen Teile zu den Hydroxygruppen der Celluloseacetatmembran erhöht, indem man über ein Brückenglied ein polyfunktionelles Polymer an die Hydroxylgruppe hängt und dann das Oligomere oder Polymer mit Ladungen versieht, sei dies durch Umsetzung mit einer ionisierbaren (anionischen) Gruppen enthaltenden Verbindung oder z. B. durch Quaternierung von Aminogruppen (Bildung von kationischen Gruppen), die das Polymer bereits enthält. Die erfindungsgemäß modifizierten Celluloseacetatmembranen halten daher z. B. mehrwertige Ionen leichter zurück als einwertige, z. B. Natriumionen.

Der optimale Acetylgehalt in den erfindungsgemäßen Membranen beträgt etwa 36—41 Gew.-%. Gegebenenfalls kann der Acetylgehalt auch geringer oder höher sein (Hydrolyse oder Acetylierung). Die erfindungsgemäßen Membranen können noch weitere geladene oder ungeladene Additive enthalten. Beispielsweise können die Membranen aus Mischungen von Polymeren, welche als eine Komponente Celluloseacetat enthalten, hergestellt werden oder die Celluloseacetatkomponente selber kann noch andere (geladene oder ungeladene) Gruppen als Acetat- oder Hydroxylgruppen enthalten.

Bei dem als Komponente (A) zu verwendenden Celluloseacetat kann es sich also um Celluloseacetate mit verschiedenen Acylierungsgraden handeln. Vorzugsweise handelt es sich um das sogenannte Cellulose-21/2-acetat.

Celluloseacetate UF- oder UF-RO-Membranen sind kommerziell erhältlich, z. B. bei Osmonics Inc, Hopkins, Minn. USA; Danske Sukkerfabrikker, Nakskow, Dänemark; Peterson Candy International, London, England; oder können von Fachleuten leicht selbst hergestellt (gegossen) werden. In der Patentliteratur sowie der übrigen einschlägigen technischen Literatur gibt es ausreichende Anleitungen zur Herstellung der Membranen (vgl. z. B. GB-A-1 158 512).

Die Komponente (B) bildet das Brückenglied zwischen dem Celluloseacetat und dem polyfunktionellen Polymer (Komponente C). Als Komponente (B) können monomere oder polymere Verbindungen in Betracht kommen, die vernetzende Eigenschaften besitzen und sowohl mit der Komponente (A) als auch mit der Komponente (C) eine chemische Bindung eingehen können. Ihre Reaktivität verdanken diese mindestens zwei funktionelle Gruppen aufweisenden Verbindungen additionsfähigen Mehrfachbindungen, Epoxidgruppen, Aziridingruppen, Aldehydgruppen, Imidatgruppen, Isocyanat- oder Isothiocyanatgruppen, ferner Hydroxylgruppen, Anhydridgruppen, Acylhalogenidgruppen sowie N-Methylolgruppen, oder als tertiäres Amin oder vorzugsweise einem als Anion abspaltbaren Substituenten, wobei diese Substituenten und Gruppierungen auch in Kombination vorkommen können. Als addierende Mehrfachbindung enthalten sie beispielsweise die Gruppierungen

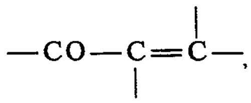, 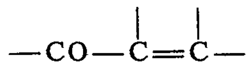 oder 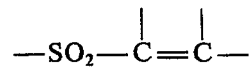

die gegebenenfalls weiter substituiert sind. Auch die Isocyanat- oder Isothiocyanatgruppe kann zu diesen Gruppen gezählt werden. Als abspaltbare Gruppen kann die Komponente (B) quaternäre Ammoniumgruppen, die als tert. Amine abgespaltet werden, wie zum Beispiel die Trimethylammonium- oder Pyridiniumgruppe, oder auch die Sulfoniumgruppe enthalten. Als bevorzugte reaktionsfähige Gruppe enthält die Komponente (B) jedoch Substituenten mit einem als Anion abspaltbaren Rest, vorzugsweise mit reaktiven Halogenatomen. Derartige als Anion abspaltbare Reste verdanken ihre Reaktivität zum Beispiel dem Einfluß elektrophiler Gruppen, wie der $-CO-$ oder $-SO_2$-Gruppe in gesättigten, aliphatischen Resten. Ferner können sie ihre Reaktivität auch dem Einfluß eines quaternären Stickstoffatoms verdanken, wie in der Gruppe der Formel

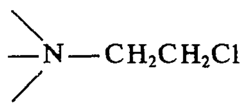

oder in aromatischen Resten dem Einfluß von in o- und p-Stellung stehenden elektrophilen Gruppen, beispielsweise Nitro-, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten.

Als besonders vorteilhaft haben sich als Komponente (B) cyclische Kohlensäureimidhalogenide und vor allem mindestens zwei reaktive Substituenten enthaltende Halogen-di- oder -triazinverbindungen erwiesen. Tetrachlorpyrimidin und vor allem Cyanurchlorid haben sich als besonders vorteilhaft erwiesen.

Bei den hier als Komponente (B) verwendeten, cyclischen Kohlensäureimidhalogeniden handelt es sich vorteilhafterweise um

($A_1$) s-Triazinverbindungen mit mindestens zwei an Kohlenstoffatome gebundenen gleiche oder verschiedene Halogenatome, wie z. B. Cyanurchlorid, Cyanurfluorid, Cyanurbromid sowie um primäre Kondensationsprodukte aus Cyanurfluorid bzw. Cyanurchlorid bzw. Cyanurbromid mit z. B. Wasser, Ammoniak, Aminen, Alkanolen, Alkaylmercaptanen, Phenolen oder Thiophenolen;

($B_1$) Pyrimidine mit mindestens zwei reaktionsfähigen gleichen oder verschiedenen Halogenatomen, wie 2,4,6-Trichlor-, 2,4,6-Trifluor- oder 2,4,6-Tribrompyrimidin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z. B. Chlor, Brom oder Fluor weitersubstituiert sein können. Besonders geeignete Halogenpyrimidine sind 2,4,6-Tri-chlor- und 2,4,5,6-Tetrachlorpyrimidin;

($C_1$) Halogenpyrimidincarbonsäurehalogenide, wie z. B. Dichlorpyrimidin-5 oder -6-carbonsäurechlorid;

($D_1$) 2,3-Dihalogen-chinoxalin, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid, 1,4-Dichlorphthalazin-6-carbonsäurechlorid oder -bromid;

($E_1$) 2-Halogen-benzo-thiazol- bzw. -oxazolcarbonsäure- oder -sulfonsäurehalogenide, wie 2-Chlorbenzothiazol- bzw. -oxazol-5- oder -6-carbonsäurechlorid bzw. -5- oder -6-sulfonsäurechlorid;

($F_1$) Halogen-6-pyridazonyl-1-alkanoylhalogenide oder -1-benzoylhalogenide, wie z. B. 4,5-Dichlor-6-pyridazonyl-1-propionylchlorid bzw. -1-benzoylchlorid.

Weitere mindestens zwei reaktive Substituenten aufweisende Verbindungen, die als Komponente (B) eingesetzt werden können, sind beispielsweise

($G_1$) Anhydride oder Halogenide aliphatischer, $\alpha,\beta$-ungesättigter Mono- oder Dicarbonsäuren mit vorzugsweise 3 bis 5 Kohlenstoffatomen, wie Maleinsäureanhydrid, Acrylsäurechlorid, Methacrylsäurechlorid und Propionsäurechlorid;

($H_1$) Anhydride oder Halogenide von bewegliche Halogenatome enthaltenden, aliphatischen Mono- oder Dicarbonsäuren mit vorzugsweise 3 bis 10 Kohlenstoffatomen oder aromatischen Carbonsäuren, wie z. B. Chloracetylchlorid, $\beta$-Chlorpropionsäurechlorid, $\alpha,\beta$-Dibrompropionsäurechlorid, $\alpha$-Chlor- oder $\beta$-Chloracrylsäurechlorid, Chlormaleinsäureanhydrid, $\beta$-Chlorcrotonsäurechlorid bzw. Fluor-nitro- oder Chlor-nitrobenzoesäurehalogenide oder

-sulfonsäurehalogenide, in welchen das Fluor- bzw. das Chloratom in o- und/oder p-Stellung zu der Nitrogruppe steht;

($I_1$) Carbonsäure-N-methylolamide oder reaktionsfähige, funktionelle Derivate dieser Methylolverbindungen. Als Carbonsäure-N-methylolamide kommen vor allem N-Methylolchloracetamid, N-Methyl-bromacetamid, N-Methylol-$\alpha,\beta$-dichlor- oder dibrompropionamid, N-Methylol-acrylamid, N-methylol-$\alpha$-chlor- oder -$\alpha$-bromacrylamid in Betracht. Als reaktionsfähige Derivate der Carbonsäure-N-methylolamide kommen beispielsweise die entsprechenden N-Chlormethyl- oder N-Brommethylamide in Frage;

($J_1$) gegebenenfalls verätherte N-Methylolharnstoffe oder N-Methylolmelamine, wie z. B. N,N-Dimethylolharnstoff, N,N-Dimethylolharnstoff-dimethyläther, N,N'-Dimethyloläthylen- oder -propylenharnstoff, 4,5-Dihydroxy-N,N'-methyloläthylenharnstoff oder -dimethyläther bzw. Di- bis Hexamethylolmelamin, Trimethylolmelamin-dimethyläther, Pentamethylolmelamin-di- oder -trimethyläther, Hexamethylolmelamin-penta- oder hexamethyläther;

($K_1$) Kondensationsprodukte von mindestens eine phenolische Hydroxylgruppe aufweisenden Diarylalkanen mit Halogenhydrinen, z. B. das Diepoxid aus 2,2-Bis(4'-hydroxyphenyl)-propan und Epichlorhydrin, sowie auch Glycerin-triglycidäther und ferner entsprechende Di-aziridine;

($L_1$) Di-aldehyde, wie z. B. Glutar- oder Adipinaldehyd;

($M_1$) Diisocyanate oder Diisothiocyanate, wie z. B. Alkylen($C_2$—$C_4$)-Diisocyanate, insbesondere Äthylendiisocyanat, Phenylen- oder Alkyl ($C_2$—$C_4$)- substituierte Phenylendiisocyanate, wie z. B. Phenylen-1,4-Diisocyanat oder Toluol-2,4-diisocyanat, ferner Phenylendiisothiocyanate, wie z. B. Phenylen-1,4-diisothiocyanat;

($N_1$) Weitere reaktive Verbindungen, wie Triscaryloyl-hexahydro-s-triazin.

Bei der Komponente (C) (polyfunktionelles Oligomere oder Polymere) handelt es sich um Verbindungen, welche aliphatische oder aromatische Aminogruppen enthalten, wobei diese primär, sekundär oder tertiär sein können; ferner kann diese Komponente Hydroxy- oder Thiogruppen aufweisen. Beispiele solcher Polymerer sind Polyäthylenimin (M. G. 150 bis 1 000 000) teilweise alkyliert (z. B. mit Methyljodid) oder andersweitig modifiziert, Polyvinylalkohol (M. G. 2000 bis 2 000 000) oder teilweise veresterter Polyvinylalkohol, Cellulosederivate, wie Äthylcellulose, Carboxymethylcellulose, Hydroxymethylcellulose, Hydroxyäthylcellulose, ferner Polyvinylanilin (M. G. 200 bis 2 000 000), Polybenzylamine, Polyvinylamin (M. G. 1000 bis 2 000 000), Polyvinylmerkaptan, Polymere aus 2-Hydroxyäthyl- oder 2-Aminoäthylmethacrylaten, Co-, Block- oder Pfropfpolymerisate aus diesen Monomeren und/oder Polymeren sowie weiteren, inbesondere ionische Gruppen ($-SO_3^{\ominus}$, $-COO^{\ominus}$, $-NR_4^{\oplus}$) enthaltenden Monomeren und/oder Polymeren. Beispiele hierfür sind die Copolymeren aus Styrolsulfonat (Natriumsalz)/Vinylanilin, 2-Aminoäthylmethacrylat/Acrylsäure, Vinylanilin/Vinylbenzyltrimethylammoniumchlorid oder Vinylamin/Vinylsulfonat.

Bevorzugte Komponenten (C) sind Polyvinylalkohole, Cellulosederivate, Polyvinylamine oder Polyvinylaniline und insbesondere Polyäthylenimine sowie auch die zuvor beispielhaft genannten Copolymeren.

Die ionisierbare Gruppen enthaltenden Reste werden durch die Komponente (D) eingeführt. Die ionisierbare Gruppe ist covalent an die Membran gebunden und das Gegenion ist beweglich und austauschbar. Unter einer anionischen ionisierbaren Gruppe ist eine solche zu verstehen, bei der das Negativion an die Membran gebunden ist und das Gegenion beweglich und austauschbar ist. Bei der kationisch ionisierbaren Gruppe ist der Sachverhalt umgekehrt.

Als Reagenzien, die eine ionisierbare Gruppe und den ein Brückenglied zwischen dieser und der Membran bildenden Rest enthalten, kommen farblose und farbige Verbindungen in Betracht, z. B. ionogene reaktive Farbstoffe, die verschiedenen Klassen angehören können und z. B. Anthrachinon-, Formacyl- oder Azofarbstoffe sind. Azofarbstoffe sind bevorzugt. Sie können gegebenenfalls auch als Metallkomplexe vorliegen.

Als Reaktivgruppen, welche die Bindung der Komponente (D) an die (modifizierte) Membran ermöglichen, seien die folgenden genannt: Carbonsäurehalogenidgruppen, Sulfonsäurehalogenidgruppen, Reste von $\alpha,\beta$-ungesättigten Carbonsäuren oder Amiden, z. B. der Acryl-, Methacryl-, $\alpha$-Chloracryl- oder $\alpha$-Bromacrylsäure, Acrylamidreste, Reste vorzugsweise niedriger Halogenalkylcarbonsäuren, z. B. der Chloressigsäure, $\alpha,\beta$-Dichlorpropionsäure oder $\alpha,\beta$-Dibrompropionsäure; Reste von Fluorcyclobutancarbonsäuren, z. B. der Tri- oder Tetrafluorcyclobutancarbonsäure; Reste mit Vinylacylgruppen, z. B. Vinylsulfongruppen oder Carboxyvinylgruppen; Reste, die Äthylsulfonyl- ($-SO_2CH_2CH_2OSO_2OH$, $-SO_2CH_2CH_2Cl$) oder Äthylaminosulfonylgruppen($-SO_2NHCH_2CH_2OSO_2OH$) enthalten und halogenierte heterocyclische Reste, wie z. B. Reste von Dihalogenchinoxalinen, Dihalogenpyridazonen, Dihalogenphthalazinen, Halogenbenzthiazolen oder vorzugsweise halogenierten Pyrimidinen oder 1,3,5-Triazinen, wie z. B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, die sich in der Komponente (D) befinden können, aufgezählt: Monochlortriazinyl, Dichlortriazinyl, 2,4-Dichlorpyrimidyl, 2,3-Dichlorchinoxalin-6-carbonyl, 4,5-Dichlorpyridazonpropionyl, 1,4-Dichlorphthalazin-6-carbonyl, Chlorbenzthiazol, das mit einem Farbstoffmolekül über $-CONH-$, $SO_2NH-$, $-NH-Ar-N=N-$ (Ar = Phenylen oder Naphthylen), verbunden ist, 5-Chlor-4-methyl-2-methylsulfonyl-pyrimidyl, Vinylsulfonyl, β-Sulfatoäthylsulfonyl, β-Sulfatoäthylaminosulfonyl, β-Chloräthylsulfonyl oder β-Sulfatopropionamido.

Besonders bevorzugt als Komponente (D) sind reaktive Azofarbstoffe, die Sulfonsäuregruppen ($-SO_3H$) oder Carboxylgruppen ($-COOH$) enthalten, wobei diese auch in Salzform z. B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, β-Sulfatoäthylsulfonyl-, β-Chloräthylsulfonyl- oder β-Sulfatoäthylaminosulfonylreste enthalten.

Als ionisierbare Gruppen in der Komponente (D) oder in der Membran nach der Modifizierung sind die genannten Sulfatogruppen, Sulfonsäuregruppen, Carbonsäuregruppen, von primären, sekundären oder tertiären Aminogruppen und Wasserstoff gebildete Ammoniumgruppen oder quaternäre Ammoniumgruppen geeignet, wobei in manchen Fällen besonders günstige Ergebnisse mit sulfonsäuregruppenhaltigen Komponenten erzielt werden.

Besonders wertvoll vielseitig sind die Membranen, in denen die Komponente (C) mit einem sulfonsäuregruppenhaltigen Azofarbstoff modifiziert ist. Der Azofarbstoff kann auch komplexgebundenes Metall, z. B. Kupfer, enthalten.

Ferner ist es auch möglich, die geladenen Gruppen durch Umsatz von Reagenzien, wie Alkyl- oder Benzylhalogeniden, mit einer Aminofunktion der Polymerkette in die Membran einzuführen. Auf diese Weise kann z. B. der Polyäthyleniminrest mit Methyljodid modifiziert werden. Andererseits kann auch mit Chlorsulfonsäure selber modifiziert werden.

Bei der Herstellung der Membranen wird so verfahren, daß man die celluloseacetathaltige Membransubstanz im ersten Reaktionsschritt in eine Lösung bringt, welche die Komponente (B) enthält, welche dann mit den nichtacylierten Hydroxylgruppen der Ausgangsmembran reagiert. Die Reaktionsbedingungen werden so gewählt, daß nicht alle reaktiven funktionellen Gruppen der Komponente (B) verbraucht, d. h. an die Hydroxylfunktion der Komponente (A) gebunden werden. Die nicht umgesetzten Gruppen der nun an die Membran gebundenen Komponente (B) werden nun mit der polymeren oder auch oligomeren polyfunktionellen Komponente (C) umgesetzt. Es ist auch möglich, daß ein Teil der Moleküle der reaktiven Komponente (B) sich mit mehr als einer Hydroxylgruppe der Komponente (A) umsetzt, so daß die Membrane vernetzt wird. Durch Kontrolle der Reaktionsbedingungen, wie Konzentration, Reaktionsdauer, Temperatur und pH-Wert kann das Verhältnis von polyfunktionellen reaktiven Molekülen, welche vernetzen (und dadurch mehr als eine Hydroxylgruppe binden) gesteuert werden. Nach dieser Umsetzung wird die Membran aus dieser Lösung entfernt und in eine zweite Lösung, welche die Komponente (C) enthält, gebracht. Einige der funktionellen Gruppen der Komponente (C) werden nun mit den reaktiven Gruppen des Reaktionsproduktes aus (A) und (B) weiter umgesetzt, während andere Gruppen für weitere Umsetzungen freibleiben. Die Variablen dieser Reaktionsstufe (Dauer, Konzentration und pH-Wert) hängen vom Polymerisationsprodukt oder Molekül ab, an das die Komponente (C) gebunden wird, sowie ferner von den funktionellen Gruppen der Komponente (C) und der sterischen Hinderung ab. Im letzten Schritt der Modifikation der Membranen werden noch ionogene Gruppen eingeführt, indem man das Umsetzungsprodukt aus den Komponenten (A), (B) und (C) mit einer wäßrigen Lösung der Komponente (D) weiter umsetzt.

Die einzelnen Umsetzungen werden in der Regel mit 1—30%igen Lösungen der Komponente durchgeführt; sie dauern jeweils 1—150 Minuten.

Ist die Komponente (B) z. B. Cyanurchlorid, so kann man etwa 0,5 bis 10%ige Lösungen in Petroläther (Siedebereich 40 bis 200°C) oder einem anderen, die Membran nicht auflösenden Lösungsmittel, auf die vorher mit Alkali, z. B. Natriumbicarbonatlösungen, behandelte Membran während einer halben bis 4 Stunden einwirken lassen. Die Reaktionszeit verkürzt sich, wenn man höher konzentrierte Lösungen der Komponente (B) verwendet.

Die Menge Cyanurchlorid, die an die Membran gebunden werden kann, kann in einem weiten Bereich variieren und z. B. 0,05 bis 1,3 Mol pro g trockener Membran betragen. Dieser Bereich hat jedoch keine limitierende Bedeutung für die Durchführbarkeit der erfindungsgemäßen Modifikation. Nach einer Zwischenspülung kann man dann z. B. mit Polyäthylenimin (Komponente (C)), das in 5- bis 20%igen wäßrigen Lösungen vorgelegt wird und die z. B. mit Natriumhydroxid auf einen pH-Wert von 8 bis 12 eingestellt sind, reagieren lassen. Die Reaktionszeit kann etwa eine halbe bis 4 Stunden und die Reaktionstemperatur etwa 0 bis 40° C betragen. Nach einer weiteren Zwischenspülung mit Wasser erfolgt dann die Reaktion mit der Komponente (D), z. B. einem Reaktivfarbstoff, wobei die Reaktion ein- oder zweistufig geführt werden kann. Im Zweistufenprozeß wird die Membran in eine Farbstoff-Salz-Lösung (z. B. Farbstoff (0,5—3%) — Natriumchlorid (5—15%)) für etwa 5 bis 30 Minuten eingetaucht, wobei die Temperatur etwa 20 bis 40°C und der pH-Wert der Lösung etwa 5,0—7,0 betragen kann.

Die Membran wird dann aus dieser Lösung herausgenommen und in eine andere, auf einen pH-Wert von etwa 10 bis 11,5 (z. B. mit Natriumcarbonat oder einer anderen Base) eingestellte Lösung getaucht, in der die Reaktion des Farbstoffs mit der Membran stattfindet. Reaktionstemperatur: 20 bis 40°C; Reaktionsdauer: 0,5 bis 1,5 Stunden. Beim einstufigen Prozeß erfolgen die Adsorption des Farbstoffs

an die Membran und die chemische Reaktion mit der Membran in derselben Lösung. Die Reaktionsbedingungen entsprechen in etwa den zuvor angegebenen. Die Farbstoffkonzentration kann allerdings im Bereich von 1 bis 5% liegen, während die Reaktionszeit bei 0,5 bis 2 Stunden liegt.

Anstelle einer Umsetzung mit dem Farbstoff kann man auch Methyljodid oder andere Alkylierungsmittel einsetzen, um so die Aminogruppen des gebundenen Polyäthylenimins zu quaternieren (kationisch modifizierte Membranen).

Diese Reaktionsbedingungen sind geeignet zur Herstellung von sogenannten selbsttragenden Membranen oder auch den (relativ dicken) Membranen, die sich auf einem Trägermaterial befinden. Sie können aber ebenso auch zur Modifizierung einer Celluloseacetat-Kompositmembran eingesetzt werden, d. h. einer Membran, die als dünner Film auf einen mikroporösen Träger aufgegossen ist.

Dieses letzte Verfahren ist dadurch gekennzeichnet, daß man auf eine Oberfläche eines mikroporösen Trägermaterials eine organische Lösung (Lösungsmittel z. B. Aceton) von Celluloseacetat aufgießt, gleichzeitig einen Luftstrom (von Raumtemperatur) über das Trägermaterial leitet, um das Lösungsmittel zu verdampfen, dann die Schicht trocknet, gegebenenfalls diese Verfahrensschritte mindestens einmal wiederholt, dann gegebenenfalls die Membran in einer wäßrigen alkalischen Lösung behandelt und schließlich die Kompositmembran mit (B) einer organischen Verbindung umsetzt, welche mindestens eine mit den Hydroxylgruppen der Membran und mindestens eine mit der Komponente (C) reaktionsfähige Gruppe aufweist, wobei so verfahren wird, daß das Umsetzungsprodukt aus den Komponenten (A) und (B) mindestens noch eine reaktionsfähige Gruppe aufweist, dann mit (C) einem polyfunktionellen Oligomer oder Polymer und weiter mit (D) einer Verbindung umsetzt, die mindestens eine ionogene Gruppe und mindestens eine mit der Komponente (C) reaktionsfähige Gruppe aufweist.

Das mikroporöse Trägermaterial verbessert die mechanische Festigkeit einer an sich mechanisch instabilen Membran, die für das Rückhaltevermögen und den Durchfluß (Flux) verantwortlich ist.

Geeignete Trägermaterialien sind wasserunlösliche Polymerisate, wie z. B. Polyacrylnitrile, Polysulfone, Polyamide, Polyolefine, wie Polyäthylene oder Polypropylene, oder cellulosische Materialien.

Die Gießlösung enthält in der Regel 2,5 bis 10% Celluloseacetat. Geeignete Lösungsmittel sind Aceton, Dimethylformamid, Dioxan, Essigsäure, Methanol, Chloroform, N-Methylpyrrolidon oder auch geeignete Mischungen aus diesen Lösungsmitteln.

Durch Wahl einer geeigneten Porengröße (mikroporöser Träger) und gleichzeitig schnelle Verdampfung des Lösungsmittels beim Gießen der Membran erreicht man eine nur geringe Penetration der Gießlösung, so daß ein hohes Durchflußvermögen der Membran erreicht wird. Trägermaterialien, die eine zu geringe Porengröße aufweisen, können den Lösungsmittelfluß durch die Membran beeinträchtigen und erfordern daher die Anwendung von höheren Arbeitsdrücken, um brauchbare Fluxwerte zu erreichen.

Geeignete Trägermaterialien weisen durchschnittlich Porengrößen zwischen 0,05 und 0,3 μm auf, und das bevorzugte Trägermaterial aus Polypropylen (Celgard®-3501-Celanase) weist Porengrößen von 0,04 bis 0,2 μm auf.

Die dicke einer einzelnen Membranschicht (im feuchten Zustand) liegt in der Regel im Bereich von 2 bis 15 μm. Nach dem Trocknen liegen diese Werte im Bereich von 0,2 bis 2 μm. Diese Werte erlauben eine schnelle Verdunstung des Lösungsmittels und andererseits wird das Eindringen in das Trägermaterial auf ein Minimum beschränkt. Gute Ergebnisse erzielt man insbesondere, wenn man mit einem Glasstab die Gießlösung schnell auf dem Trägermaterial verteilt. (Der Glasstab wird von einer Seite des Trägers über diesen gezogen und verteilt so die Gießlösung).

Ähnliche Resultate können auch erreicht werden, wenn man die Schichten mit Rakeln, Tiefdruckzylindern (-rollen), Luftrakeln oder Meniscusbeschichtern aufträgt.

Gegebenenfalls werden die Celluloseacetatschichten vor der Modifikation mit wäßrigen alkalischen Lösungen, z. B. wäßrigen Natriumcarbonatlösungen bei Raumtemperatur (15 bis 30° C) behandelt, um Celluloseacetatmembranen mit verschiedenem Acetylierungsgrad zu erhalten.

Die Dicke der Celluloseacetatschichten auf dem mikroporösen Trägermaterial beträgt in der Regel 0,2 bis 10 und vorzugsweise 1 bis 6 μm.

Die Membranen können, je nach Verwendungszweck, verschiedene Formen aufweisen, z. B. plattenförmig, blattförmig, röhrenförmig, in Form einer Tasche, eines Sacks, eines Kegels oder von Hohlfasern vorliegen. Bei starken Druckbelastungen können die Membranen natürlich durch Non-wovens Träger, Drahtsiebe oder Lochplatten gestützt werden. Innerhalb des weiter oben angegebenen Bereiches kann die Porengröße durch verschiedene Temperaturen variiert und ebenfalls dem jeweiligen Verwendungszweck angepaßt werden. Zweckmäßig beträgt die durchschnittliche Ladungsdichte (d. h. der Gehalt ionisierbarer Gruppen) der Membran 1—1000 Milliäquivalente, vorzugsweise 10—500 Milliäquivalente je Kilogramm trockene Membran.

Gegenüber bekannten modifizierten Membranen zeigen die erfindungsgemäßen bzw. erfindungsgemäß hergestellten Membranen folgende Vorteile:

1. Verbessertes Rückhaltevermögen von geladenen, insbesondere mehrfach geladenen ionogenen Substanzen einer wässerigen Lösung.

2. Vergrößerung des Unterschiedes im Rückhaltevermögen von mehrfach geladenen zu monovalenten Ionen in wässerigen Lösungen.
3. Verbesserung des Wirkungsgrades der Trennung (Konzentrierung) von geladenen, insbesondere mehrfach geladenen Ionen vom Lösungsmittel (Wasser),
4. Verbesserung des Wirkungsgrades beim Trennen von mehrfach geladenen von einfach geladenen gelösten Stoffen.
5. Verbesserung der Membranen bezüglich Lösungsmittelbeständigkeit und verbesserte Stabilität, die durch die Vernetzung einzelner Celluloseacetatketten erreicht wird. Verbesserte Stabilität gegen hohe Drücke (z. B. 2 bis 40, vorzugsweise 2 bis 30 bar).

Insbesondere die folgenden Anwendungen sind für die erfindungsgemäßen Membranen vorteilhaft, wobei es sich im Prinzip stets um Trennungen einwertiger Ionen niedrigen Ionengewichts von mehrwertigen Ionen mit niedrigem oder höherem Ionengewicht oder einwertigen Ionen mit höherem Ionengewicht, um Trennungen ionogener von nichtionogenen Substanzen oder von ionogenen Verbindungen unterschiedlichen Molekulargewichts oder entgegengesetzter Ladung handelt:

1. Die Trennung von organischen und auch metallorganischen ionogenen Substanzen von Nebenprodukten aus einer Reaktionsmischung und anderen Substanzen, welche darin enthalten sind, z. B. von Salzen, wie Natriumchlorid, Natriumsulfat oder Natriumacetat.
2. Die Trennung von Schwermetallkomplexen von solchen Salzen, welche keine Komplexe bilden (Behandlung von Abwässern).
3. Die Reinigung von Abwässern, welche bei der Produktion und Anwendung von Farbstoffen und optischen Aufhellern anfallen.
4. Die Trennung von Proteinen oder Hormonen, welche ähnliche Molekulargewichte haben, jedoch entgegengesetzt geladen sind.
5. Die Trennung von ionischen Tensiden (Detergenzien, Netzmittel oder Dispergatoren) von anderen Chemikalien, welche in der Reaktionsmischung nach der Herstellung der Tenside noch vorhanden sind (Nebenprodukte, überschüssige Ausgangsprodukte).
6. Die Entfernung von ionogenen Tensiden aus Abwässern.
7. Die Trennung von ionogenen Molekülen von Wasser, d. h. die Konzentrierung von wässerigen Lösungen, welche Metallkomplexe, Tenside, Farbstoffe oder Proteine und andere geladene organische Verbindungen enthalten, wobei bessere Ergebnisse bezüglich des Wirkungsgrades (Durchfluß pro Zeiteinheit) und des Trenneffektes im Vergleich zu bekannten Membranen erzielt werden.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl ruhend, in eine zylindrische Zelle aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Muster von je 5 ml gezogen werden. Im allgemeinen ist die Durchflußmenge durch die Membran und die Zusammensetzung der 3 Muster konstant. Hieraus läßt sich das Rückhaltevermögen als

$$R = \frac{c_1 - c_2}{c_1} \cdot 100 \, (\%)$$

berechnen. Als Durchflußmenge pro Flächen- und Zeiteinheit ergibt sich

$$D = V \cdot F^{-1} \cdot t^{-1}$$

V: Volumen
F: Membranfläche
t: Zeit

D ist zweckmäßig ausgedrückt in $m^3 \cdot m^{-2} \cdot d^{-1}$, d. h. Anzahl Kubikmeter je Quadratmeter Membranfläche und Tag oder in $l \ m^{-2} \ h^{-1}$, d. h. Liter pro Quadratmeter Membranfläche und Stunde.

Zusätzlich zu den Messungen an Flachmembranen werden auch röhrenförmige Membranen von 60 cm Länge und einem äußeren Durchmesser von 1,4 cm untersucht. Diese röhrenförmigen Membranen werden in eine perforierte Röhre aus rostfreiem Stahl gebracht.

Das Ganze wird in eine Röhre aus Polycarbonat gebracht. Der Ausfluß der Membran befindet sich zwischen dieser äußeren Polycarbonatröhre und der Stahlröhre. Die Flüssigkeitszugabe erfolgt als turbulent fließender Strom der Lösung unter einem Druck von 20 bar. Die Fließgeschwindigkeit wird konstant bei 10 bis 15 Liter pro Minute gehalten. Die Berechnung des Rückhaltevermögens und des Durchflusses erfolgt auf die gleiche Weise wie für die Flachmembranen.

In den nachfolgenden Beispielen werden die Farbstoffe und farblosen Verbindungen der Formeln

(5) bis (9) und (11) bis (18) als Komponente (D) verwendet; die Verbindungen der Formeln (1) bis (4) und (10) dienen zu Testzwecken:

2 : 1-Cr Komplex von

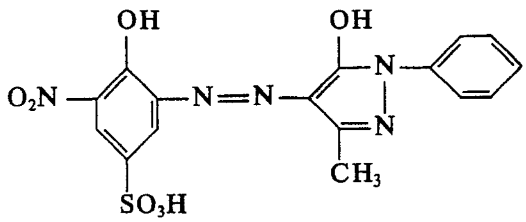

(1)

ca 1/3 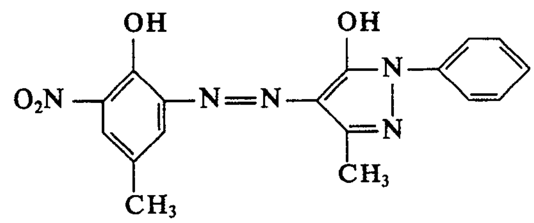

+

ca 2/3 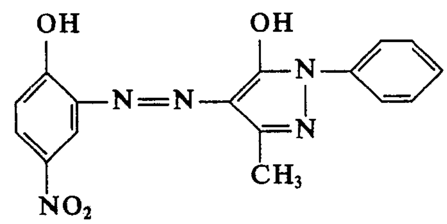

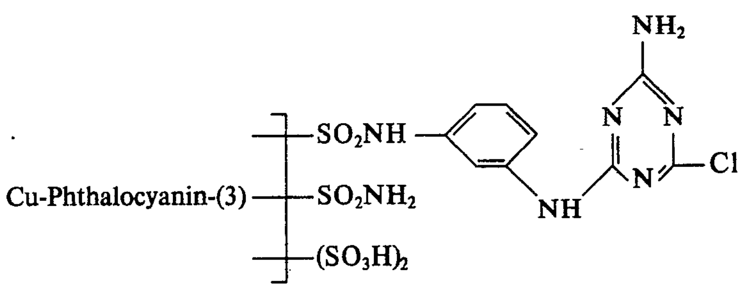

(2)

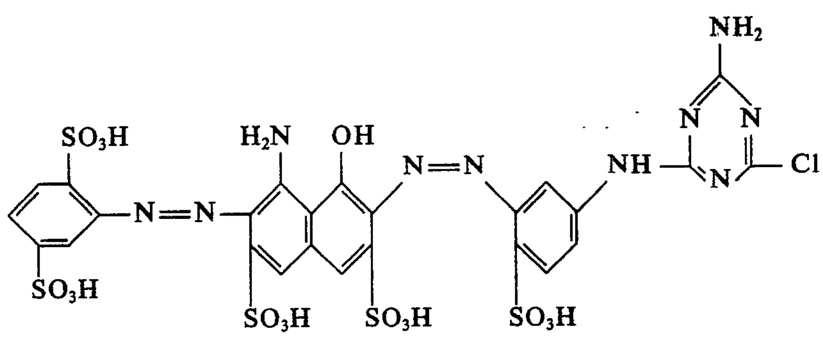

(3)

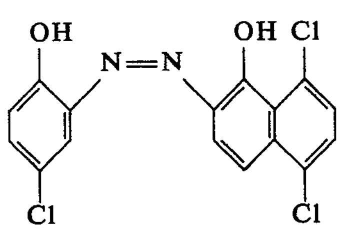

+

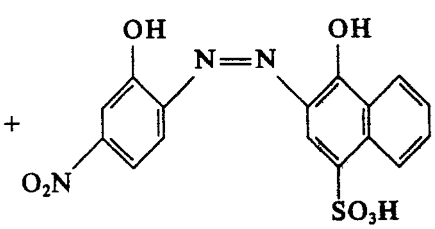

(4)

1 : 2-Cr-Komplex

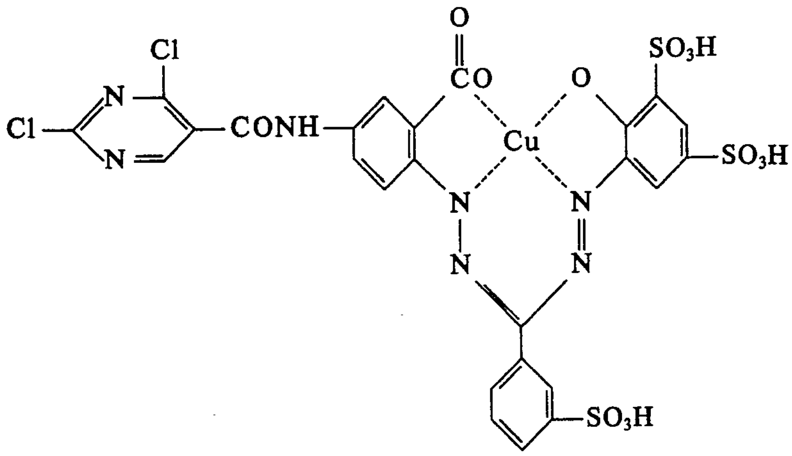

(5)

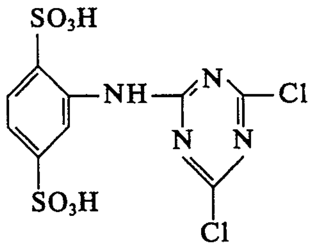

(6)

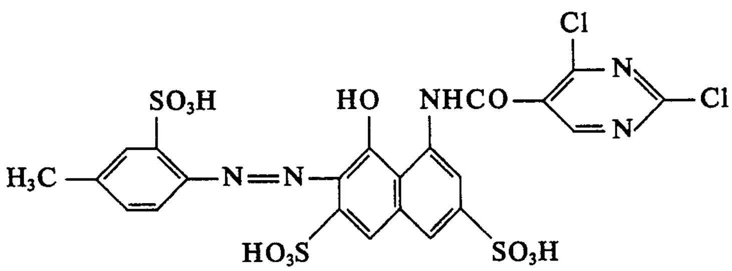

(7)

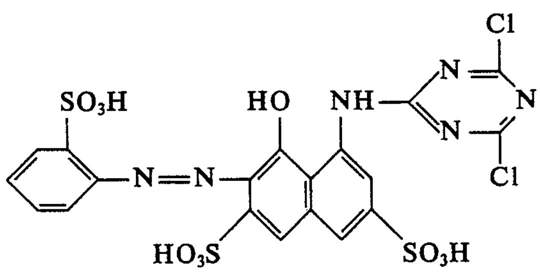

(8)

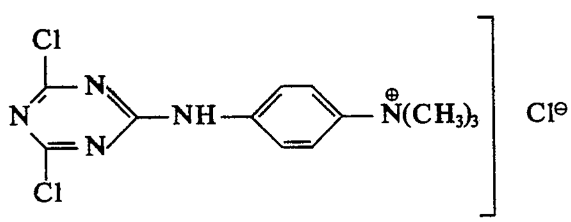

(9)

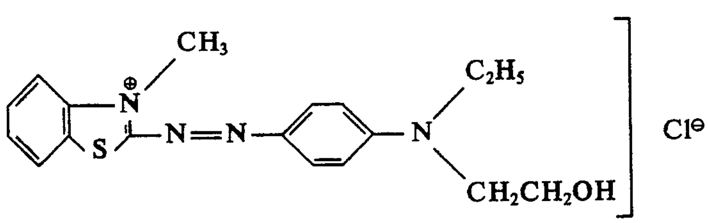

(10)

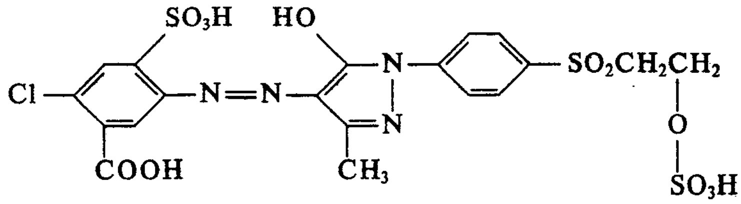

(11)

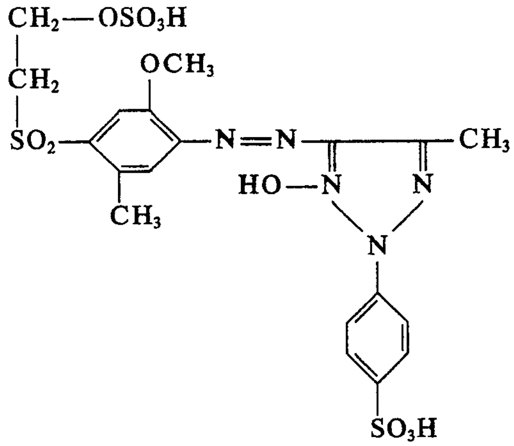

(12)

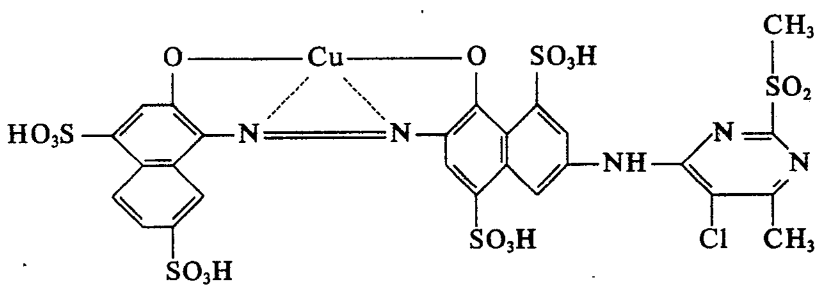

(13)

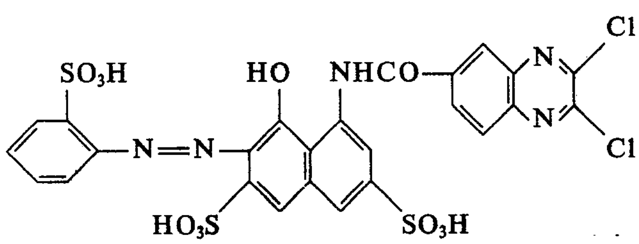

(14)

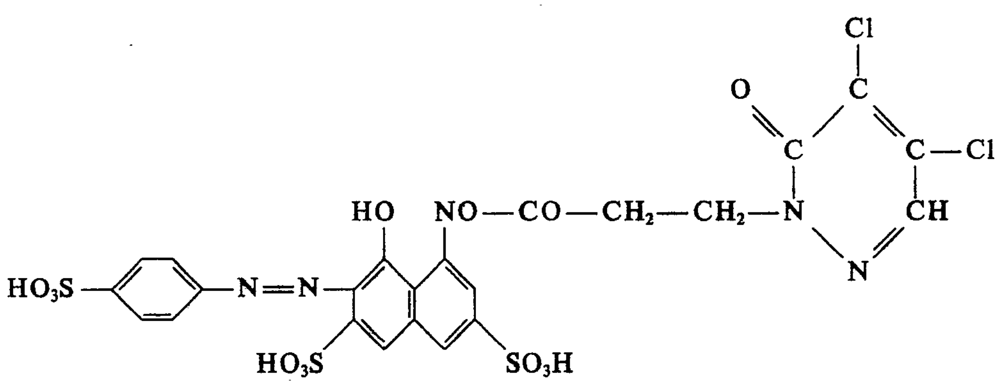

(15)

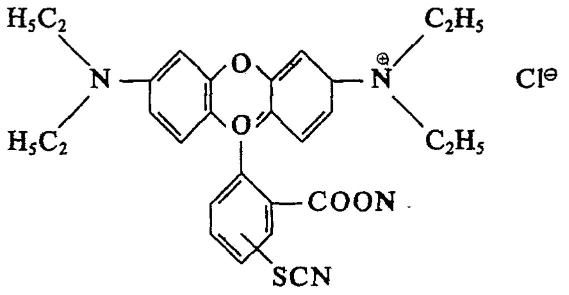

(16)

1-Amino-4-acryloaminobenzol-3-sulfonsäure, diazotiert und gekuppelt mit 1-Oxynaphthalin-4-sulfonsäure. (17)

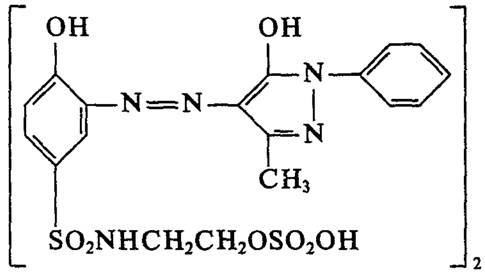

(18)

In den folgenden Beispielen beziehen sich Teile und Prozente auf das Gewicht, sofern nicht anders angegeben.

## Beispiele

Die in den nachfolgenden Beispielen erfindungsgemäß modifizierten Membranen werden aus folgenden Celluloseacetat-Ausgangsmembranen (Acetylgehalt 38,9%) hergestellt:

Tabelle 1

| Membran | Molekulargewicht von Dextrin, welches zu 95% zurückgehalten wird | Maximaler Arbeitsdruck in bar | Porendurchmesser (Å) | Rückhaltevermögen in % für eine 2%ige Lösung | | | Durchfluß für 2%ige Lösung des Farbst. der Formel (3) in $l/m^2 \cdot h$ |
|---|---|---|---|---|---|---|---|
| | | | | Farbst. der Formel (3) | Natriumchlorid | Natriumsulfat | |
| $M_1$ | 1000 | 25 | 18 | 97 | 19 | 34 | 40 |
| $M_2$ | 1000–2000 | 20 | 20 | 90 | | 18 | 80 |
| $M_3$ | 2000 | 13 | 24 | 82 | 4,5 | 15,0 | 55 |
| $M_4$ | 20 000 | 10 | 43 | 45 | 1,0 | 4,0 | 90 |

## Beispiel 1

Vier 60 cm lange Röhrenmembranen des Types $M_3$ werden wie folgt modifiziert: Die Membranen werden während 15 Minuten mit einer 5%igen Lösung von Natriumbicarbonat und hierauf während 2 Stunden mit einer 2%igen Petrolätherlösung (Siedepunkt 80—100°C) von Cyanurchlorid behandelt. Nachdem die so behandelten Membranen in kaltem Wasser gespült worden sind, werden sie in eine 20%ige mit Natriumhydroxid auf einen pH-Wert von 9 eingestellte Polyäthyleniminlösung (Molekulargewicht 189) gebracht und dort während 2 Stunden bei 40°C gehalten. Anschließend werden die Membranen während 2 Stunden mit Wasser gespült. Zwei dieser Membranen werden dann in eine Lösung getaucht, welche 5% des Reaktivfarbstoffs der Formel (5), 10% Natriumchlorid und genügend Natriumcarbonat um den pH-Wert auf 10,5 zu bringen, enthält und während 2 Stunden bei Raumtemperatur in dieser Lösung belassen. Die zwei übrigen Membranen werden in dem ursprünglichen Zustand belassen und nicht mit ionisierbaren Gruppen beladen. Die vier Membranen werden hierauf bezüglich ihres Rückhaltevermögens und der Durchflußgeschwindigkeit geprüft, und zwar mit einer 7%igen Lösung des Farbstoffes der Formel (3) bei einem Druck von 13 bar und bei Raumtemperatur. Zum Vergleich werden die unmodifizierten Membranen $M_1$ und $M_3$ getestet, ebenso eine Membran (5), welche durch bloße Umsetzung der Membran $M_1$ mit dem Reaktivfarbstoff der Formel (5) erhalten worden ist.

Tabelle 2

| Nr. | Membran | Arbeitsdruck in bar | Durchfluß (Flux) in $l/m^2 \cdot h$ | Rückhaltevermögen in % |
|---|---|---|---|---|
| 1. | $M_3$—CC—PEI | 13 | 44 | 94,8 |
| 2. | $M_3$—CC—PEI | 13 | 53 | 90,7 |
| 3. | $M_3$—CC—PEI—D—$SO_3$—Na | 13 | 43 | 99,4 |
| 4. | $M_3$—CC—PEI—D—$SO_3$—Na | 13 | 45 | 98,4 |
| 5. | $M_1$—D—$SO_3$—Na | 25 | 35 | 99,0 |
| 6. | $M_1$ | 25 | 23 | 98,6 |
| 7. | $M_3$ | 13 | 63 | 85 |

CC: Cyanurchlorid.
PEI: Polyäthylenimin.
—D—$SO_3$—Na: Rest des gebundenen Reaktivfarbstoffes.

## Beispiel 2

Die Membran $M_3$ wird gleich modifiziert wie in Beispiel 1 angegeben, mit der Ausnahme, daß eine 10%ige Lösung eines Polyäthylenimins vom Molekulargewicht 30 000 anstelle der Lösung eines Polyäthylenimins vom Molekulargewicht 189 verwendet wird. Der Durchfluß und das Rückhaltevermögen für verschiedene Lösungen werden in der nachfolgenden Tabelle 3 für eine Flachmembran von 13 $cm^2$ bei 13 bar angegeben. Es können 0,5- bis 10%ige Polyäthyleniminlösungen verwendet werden, die Reaktionszeit kann im Bereich von 5 Minuten bis 2 Stunden und der pH-Wert im Bereich von 7 bis 12 liegen.

Tabelle 3

| Substanz | Konzentration in % | Rückhaltevermögen in % | Durchfluß in $l/m^2 \cdot h$ |
|---|---|---|---|
| Farbstoff der Formel (1) | 1,0 | 99,99 | 42 |
| Farbstoff der Formel (2) | 1,0 | 99,99 | 30 |
| Natriumchlorid | 1,0 | 18,0 | 52 |
| Natriumsulfat | 1,0 | 70,0 | 49 |
| Rohrzucker | 2,0 | 58,1 | 52 |
| Natriumdodecylsulfat | 0,05 | 89,0 | 60 |
| Kobaltcitrat | 0,02 | 99,0 | 56 |
| Aethylendiamintetraessigsäure (Quecksilberkomplex) | 0,01 | 99,6 | 50 |
| Kupfercitrat | 0,01 | 99,8 | 62 |

Sofern man eine wässerige Lösung, welche 7% des Farbstoffes der Formel (3) und 2% NaCl enthält, durch eine 60 cm lange Rohrmembran der in diesem Beispiel angegebenen Zusammensetzung filtriert, beträgt das Rückhaltevermögen 99,9% bzw. −12% (negatives Rückhaltevermögen).

Beispiel 3

Beispiel 2 wird wiederholt, jedoch unter Verwendung der Ausgangsmembrane $M_4$ anstelle der Ausgangsmembran $M_3$. Das Rückhaltevermögen und der Durchfluß werden in der nachfolgenden Tabelle für eine Flachmembran von 13 $cm^2$ bei 10 bar angegeben.

Tabelle 4

| Substanz | Konzentration in % | Rückhaltevermögen in % | Durchfluß in $l/m^2 \cdot h$ |
|---|---|---|---|
| Farbstoff der Formel (2) | 1,5 | 99,8 | 76 |
| Farbstoff der Formel (3) | 1,5 | 99,6 | 70 |
| Natriumchlorid | 2,0 | 12,0 | 80 |
| Natriumsulfat | 2,0 | 46,8 | 67 |

Sofern man für die Membran $M_4$ gleich modifiziert wie für die Membrane $M_3$ in Beispiel 1 angegeben, so sind das Rückhaltevermögen und der Durchfluß für eine 1,5%ige Lösung des Farbstoffes der Formel (3) 97% bzw. 120 $l/m^2 \cdot h$ und für eine 2%ige NaCl-Lösung 3,8% bzw. 167 $l/m^2 \cdot h$. Die entsprechende unmodifizierte Membrane hat ein Rückhaltevermögen und einen Durchfluß für den Farbstoff der Formel (3) von 45% und 90 $l/m^2 \cdot h$. Sofern die Membran $M_4$ nur mit der Komponente (d) modifiziert wird, betragen die entsprechenden Werte für das Rückhaltevermögen und den Durchfluß 79% und 90 $l/m^2 \cdot h$.

Beispiel 4

Beispiel 1 wird wiederholt unter Verwendung der Membran $M_2$ anstelle der Membran $M_3$. Das Rückhaltevermögen und der Durchfluß für eine Flachmembran von 13 $cm^2$ bei 20 bar werden in der nachfolgenden Tabelle angegeben.

Tabelle 5

| Substanz | Konzentration in % | Rückhaltevermögen in % | Durchfluß in $l/m^2 \cdot h$ |
|---|---|---|---|
| Farbstoff der Formel (3) | 0,5 | 99,5 | 96 |
| Farbstoff der Formel (4) | 0,5 | 99,8 | 74 |
| Natriumchlorid | 1,0 | 9,0 | 110 |
| Natriumsulfat | 1,0 | 54,0 | 89 |

Beispiel 5

Beispiel 1 wird wiederholt jedoch unter Verwendung des Reaktivfarbstoffes der Formel (4). Das Rückhaltevermögen und der Durchfluß für eine Flachmembran von 13 $cm^2$ bei 13 bar sind in der nachfolgenden Tabelle 6 angegeben.

Tabelle 6

| Substanz | Konzentration in % | Rückhaltevermögen in % | Durchfluß in $l/m^2 \cdot h$ |
|---|---|---|---|
| Farbstoff der Formel (3) | 1 | 98,9 | 46 |
| Natriumchlorid | 2 | 14 | 61 |

Beispiel 6

Beispiel 2 wird wiederholt jedoch unter Verwendung des Produktes der Formel (6). Rückhaltevermögen und Durchfluß für eine Flachmembran von 13 $cm^2$ bei 13 bar sind in der nachfolgenden Tabelle 7 angegeben.

Tabelle 7

| Substanz | Konzentration in % | Rückhaltevermögen in % | Durchfluß in $l/m^2 \cdot h$ |
|---|---|---|---|
| Farbstoff der Formel (3) | 0,15 | 99,6 | 34 |
| Natriumchlorid | 1,0 | 22 | 50 |

Beispiel 7

Beispiel 2 wird wiederholt jedoch unter Verwendung der reaktiven quaternären Ammoniumverbindung der Formel (9) anstelle des Reaktivfarbstoffes der Formel (5). Im Gegensatz zu den Membranen der Beispiele 1—6 enthält diese Membrane nun positive Gruppen anstelle der negativen Sulfonsäuregruppen. Das Rückhaltevermögen und der Durchfluß für eine Flachmembran von 13 $cm^2$ bei 13 bar sind in der nachfolgenden Tabelle 8 zusammengestellt.

Tabelle 8

| Substanz | Konzentration in % | Rückhaltevermögen in % | | Durchfluß in $l/m^2 \cdot h$ | |
|---|---|---|---|---|---|
| | | modifiziert | unmodifiziert | modifiziert | unmodifiziert |
| Farbstoff der Formel (10) | 0,5 | 99,3 | 88 | 24 | 56 |
| $CaCl_2$ | 1,0 | 92,0 | 30 | 30 | 56 |

Beispiel 8

Beispiel 2 wird wiederholt mit der Ausnahme, daß die letzte Stufe d. h. die Umsetzung mit dem Farbstoff der Formel (5) ersetzt wird durch eine Reaktion mit Methyljodid um die Aminogruppen des gebundenen Polyäthylenimins zu quaternieren. Bei diesem Verfahren wird so vorgegangen, daß die Membrane nach der Umsetzung mit dem Polyäthylenimin in eine Petrolätherlösung getaucht wird, welche 2% (0,5 bis 5%) Methyljodid und 2% Natriumbicarbonat (suspendiert) enthält und dort für 2 Stunden gehalten wird. Die Membran wird anschließend während 2 Stunden in Wasser gewaschen. Das Rückhaltevermögen und der Durchfluß für eine Membran von 13 $cm^2$ bei 13 bar sind in der nachfolgenden Tabelle 9 angegeben.

Tabelle 9

| Substanz | Konzentration in % | Rückhaltevermögen in % | Durchfluß in $l/m^2 \cdot h$ |
|---|---|---|---|
| Farbstoff der Formel (10) | 1,5 | 98,6 | 35 |
| $CaCl_2$ | 1,0 | 88 | 41 |

Beispiel 9

Beispiel 2 wird wiederholt jedoch wird das Polyäthylenimin durch Polyvinylalkohol (Molekulargewicht 14 000) ersetzt. Die entsprechenden Ergebnisse für eine 13 $cm^2$ Flachmembran bei 13 bar sind in der nachfolgenden Tabelle 10 zusammengestellt.

Tabelle 10

| Substanz | Konzentration in % | Rückhaltevermögen in % | Durchfluß in $l/m^2 \cdot h$ |
|---|---|---|---|
| Farbstoff der Formel (1) | 1,0 | 99,9 | 93 |
| Farbstoff der Formel (3) | 1,0 | 99,8 | 85 |
| Natriumchlorid | 1,0 | 8,5 | 105 |
| Natriumsulfat | 1,0 | 62,5 | 81 |

Beispiel 10

Beispiel 8 wird wiederholt, jedoch unter Verwendung des Reaktivfarbstoffes der Formel (8) als Komponente (d) anstelle des Reaktivfarbstoffes der Formel (5). Das Rückhaltevermögen und der Durchfluß für eine 1%ige Lösung des Farbstoffs der Formel (3) betragen 98,6% und 90 $l/m^2 \cdot h$.

Beispiel 11

Beispiel 1 wird wiederholt, anstelle von Cyanurchlorid wird jedoch Tetrachlorpyrimidin eingesetzt. Die Reaktionsbedingungen werden insofern etwas abgeändert indem die Reaktion der Celluloseacetatmembran mit dem Tetrachlorpyrimidin im Bereich von 40 bis 70° C, insbesondere bei 50° C und die Reaktion mit dem Polyäthylenimin bei 45° C durchgeführt werden. Die Prüfergebnisse für eine 12 $cm^2$ Membran bei 13 bar sind in der nachfolgenden Tabelle 11 zusammengestellt.

Tabelle 11

| Substanz | Konzentration in % | Rückhaltevermögen in % | Durchfluß in $l/m^2 \cdot h$ |
|---|---|---|---|
| Farbstoff der Formel (3) | 0,5 | 98,4 | 58 |
| Natriumchlorid | 2,0 | 12 | 72 |

Beispiel 12

Beispiel 1 wird wiederholt mit der Ausnahme, daß anstelle einer Petrolätherlösung eine wässerige Suspension von Cyanurchlorid bei Temperaturen von unter 4° C, insbesondere bei 0° C verwendet wird. Der pH-Wert der wässerigen Suspension wird während der Reaktionszeit von 2 Stunden durch 1N—NaOH bei 6—7 gehalten. Die übrigen Bedingungen sind die gleichen wie in Beispiel 1 angegeben. Das Rückhaltevermögen und der Durchfluß für eine 1%ige Lösung des Farbstoffs der Formel (3) betragen 99,2% bzw. 70 $l/m^2 \cdot h$.

Beispiel 13

(a) Eine Lösung von 10 g Celluloseacetat in 180 g Aceton werden 6 Stunden bei Raumtemperatur gerührt und dann bei 2 bar Druck durch Filter mit Porengrößen von 20 µm, 5 µm und 0,3 µm filtriert.

Die so erhaltene Lösung wird dann auf einen mikroporösen Träger (mikroporöse Stützmembran) aus Polypropylen gegossen. Dazu wird ein Streifen des Trägermaterials auf eine Glasplatte aufgespannt und an beiden Enden mit Klebband verklebt. 5 ml der Celluloseacetat-Gießlösung werden an einem Ende des Streifens aufgebracht und mit einem Glasstab gleichmäßig auf dem Trägermaterial verteilt. Der Glasstab wird dazu hinter der Lösung aufgesetzt und über das Trägermaterial gezogen. Während dieses Verfahrensschrittes wird Luft von Raumtemperatur über den Träger geblasen, um das Wasser zu verdampfen und die Celluloseacetatschicht zu trocknen. Die Verdampfungszeit beträgt weniger als 1 Sekunde. Dieser Vorgang wird viermal wiederholt.

Der mit den Celluloseacetatschichten beschichtete Polypropylenträger wird dann von der Glasplatte entfernt und während 10 Stunden in eine 0,1-NaOH-Lösung eingetaucht. Die Membran wird dann mit entionisiertem Wasser gewaschen, bis der pH-Wert der Lösung gleich dem des entionisierten Wassers ist. Man erhält so eine Cellulosekompositmembran auf Polypropylen mit einem Durchfluß und einem Rückhaltevermögen für eine wässerige Lösung des Farbstoffs der Formel (3) (15 000 ppm) bei einem pH-Wert von 10 und einem Druck von 20 bar von 60 $l/m^2 \cdot h$ und 95,5%. Nach 120 Stunden bei einem pH-Wert von 10 weist diese Membran ein Durchfluß- und ein Rückhaltevermögen von 58 $l/m^2 \cdot h$ und 90,8% auf.

(b) Die Cellulosekompositmembran gemäß (a) wird während 15 Minuten bei Raumtemperatur in einer wässerigen Lösung behandelt, die 10% Natriumchlorid und 1% des Farbstoffs der Formel (5) enthält. Die Membran wird anschließend in einer wässerigen 2%igen Natriumcarbonatlösung während 30 Minuten behandelt und dann in einer 1%igen Essigsäurelösung gespült. Die so erhaltene Membran hat ein Rückhaltevermögen und einen Durchfluß von 98% und 19 $l/m^2 \cdot h$ für den Farbstoff der Formel (3) (15 000 ppm) bei einem Druck von 20 bar und einem pH-Wert von 10.

Nach 120 Stunden bei einem pH-Wert von 10 weist diese Membran einen Durchfluß und ein Rückhaltevermögen von 34,3 $l/m^2 \cdot h$ und 98% auf.

Die unter (a) und (b) beschriebenen Membranen sind Vergleichsmembranen.

(c) Die Kompositmembran gemäß (a) wird erfindungsgemäß modifiziert mit Cyanurchlorid, Polyäthylenimin und dem Farbstoff der Formel (5) wie in Beispiel 1 beschrieben.

Der Durchfluß und das Rückhaltevermögen für eine wäßrige Lösung des Farbstoffs der Formel (3) (15 000 ppm) bei einem pH-Wert von 10 und einem Druck von 20 bar beträgt 20 $l/m^2 \cdot h$ und 99,5%.

Beispiel 14

Beispiel 3 wird wiederholt, indem man die Ausgangsmembran M-4 mit einer 10%igen Lösung von Polyvinylamin (Molekulargewicht 50 000—160 000) modifiziert. Die resultierende Membran hat einen Durchfluß und ein Rückhaltevermögen von 20 l/m² · h und 98% für einen Farbstoff der Formel (3) bei einem Druck von 10 bar und einem Gehalt der Farbstofflösung von 1500 ppm. Die so erhaltene Membran ist unlöslich in Dimethylformamid, Aceton und N-Methylpyrrolidon-(2).

Beispiel 15

(a) Beispiel 3 wird wiederholt, wobei man jedoch den Farbstoff der Formel (12) anstelle des Farbstoffs der Formel (5) verwendet. Die so modifizierte Membran weist einen Durchfluß und ein Rückhaltevermögen für eine Lösung des Farbstoffs der Formel (3) (1500 ppm) von 34 l/m² · h und 96% bei einem Druck von 10 bar auf.

(b) Man verfährt wie in (a), verwendet jedoch den Farbstoff der Formel (15) anstelle des Farbstoffs der Formel (5). Die so modifizierte Membran weist einen Durchfluß und ein Rückhaltevermögen für eine Lösung des Farbstoffs der Formel (3) (1500 ppm) von 29 l/m² · h und 97% bei einem Druck von 10 bar auf.

(c) Man verfährt wie in (a), verwendet jedoch den Farbstoff der Formel (16) anstelle des Farbstoffs der Formel (5). Die so modifizierte Membran weist einen Durchfluß und ein Rückhaltevermögen für eine Lösung des Farbstoffs der Formel (3) (1500 ppm) von 35 l/m² · h und 94% bei einem Druck von 10 bar auf.

Beispiel 16

Beispiel 3 wird wiederholt, wobei man jedoch anstelle einer Lösung von Cyanurchlorid in Petroläther eine 10%ige Lösung von Hexamethylolmelamin zur Modifikation der Membran verwendet. Der Reaktionsschritt wird bei einem pH-Wert von 8 durchgeführt, die Reaktionszeit beträgt 2 Stunden. Die Synthese von Hexamethylolmelamin wird z. B. in US-A-2 328 592 beschrieben. Die so modifizierte Membran ist in Dimethylformamid unlöslich. Sie weist einen Durchfluß und ein Rückhaltevermögen für eine wäßrige Lösung des Farbstoffs der Formel (3) (1500 ppm) von 40 l/m² · h und 96% bei einem Druck von 10 bar auf.

**Patentansprüche**

1. Poröse, semipermeable, mit ionisierbaren Gruppen modifizierte Celluloseacetatmembran, dadurch gekennzeichnet, daß sie aus

a) einer Celluloseacetat enthaltenden Membran (Komponente (A)) besteht, die vor der Modifikation an der Oberfläche Poren mit einem Durchmesser von 10 bis 1000 Å aufweist, an die über
b) mindestens ein Brückenglied, abgeleitet von einer organischen Verbindung (Komponente (B)) mit mindestens 2 funktionellen Gruppen,
c) mindestens ein polyfunktionelles, lineares oder verzweigtes Oligomer oder Polymer (Komponente (C)) gebunden ist, welches seinerseits mit
d) ionisierbaren Gruppen enthaltenden Verbindungen (Komponente (D)) weiter umgesetzt ist.

2. Membran nach Anspruch 1, dadurch gekennzeichnet, daß der Acetatgehalt der Celluloseacetatmembran (Komponente (A)) 36—41 Gew.-% beträgt.

3. Membran nach Anspruch 1, dadurch gekennzeichnet, daß das Brückenglied sich von einem cyclischen Kohlensäureimidhaloimidhalogenid oder von Verbindungen, die Isocyanat-, Isothiocyanat- oder N-Methylol-Gruppen enthalten, ableitet.

4. Membran nach Anspruch 1, dadurch gekennzeichnet, daß die polyfunktionelle Komponente (C) aliphatische oder aromatische Aminogruppen, Hydroxylgruppen oder Thiolgruppen aufweist.

5. Membran nach Anspruch 4, dadurch gekennzeichnet, daß die Komponente (C) ein Polyäthylenimin, Polyvinylalkohol, Polyvinylamin, Vinylamin/Vinylsulfonat-Copolymer oder Polyvinylanilin ist.

6. Membran nach Anspruch 1, dadurch gekennzeichnet, daß die Komponente (D) als ionisierbare Gruppe Sulfonsäuregruppen, Carboxylgruppen oder Ammoniumgruppen enthält.

7. Membran nach Anspruch 6, dadurch gekennzeichnet, daß die Komponente (D) ein reaktiver Azofarbstoff ist, der Sulfonsäuregruppen, Carbonsäuregruppen oder Ammoniumgruppen enthält.

8. Membran nach einem der Ansprüche 1 bis 7, dadurch gekennzeichnet, daß sie als dünner Oberflächenfilm auf einem mikroporösen Träger in Form einer Kompositmembran vorliegt.

9. Membran nach Anspruch 8, dadurch gekennzeichnet, daß der mikroporöse Träger Polyolefine, Polyacrylnitrile, Polyamide, Polysulfone oder cellulosische Materialien enthält.

10. Membran nach Anspruch 8, dadurch gekennzeichnet, daß der semipermeable Oberflächenfilm eine Dicke von mindestens 0,5 µm hat.

11. Verfahren zur Herstellung einer porösen, semipermeablen, modifizierten Celluloseacetatmembran nach Anspruch 1, dadurch gekennzeichnet, daß man

a) eine Celluloseacetat enthaltende Membran (Komponente (A)), die an der Oberfläche Poren mit einem Durchmesser von 10—1000 Å aufweist, mit
b) einer organischen Verbindung (Komponente (B)) mit mindestens einer Gruppe, die mit den Hydroxylgruppen der Membran reagiert und mindestens einer Gruppe, die mit der Komponente (C) reagiert, umsetzt, wobei so verfahren wird, daß das Umsetzungsprodukt aus den Komponenten (A) und (B) mindestens noch eine reaktionsfähige Gruppe aufweist, dann mit
c) einem polyfunktionellen linearen oder verzweigten Oligomer oder Polymer (Komponente (C)) und anschließend
d) einer Verbindung (Komponente (D)) umsetzt, die mindestens eine ionische Gruppe und mindestens eine Gruppe, die mit der Komponente (C) reagiert, enthält.

12. Verfahren nach Anspruch 11, dadurch gekennzeichnet, daß man eine semipermeable Kompositmembran herstellt, indem man auf eine Oberfläche eines mikroporösen Trägers eine organische Lösung von Celluloseacetat aufgießt, wobei gleichzeitig ein Luftstrom, der Raumtemperatur aufweist, über die gegossene Schicht geführt wird, um das Lösungsmittel zu entfernen, die entstehende Schicht dann getrocknet wird, die einzelnen Verfahrensschritte mindestens einmal wiederholt werden, die Membran dann in einer wässerigen alkalischen Lösung behandelt und anschließend die Modifikation mit den Komponenten (B), (C) und (D) durchführt.

13. Verfahren nach einem der Ansprüche 11 oder 12, dadurch gekennzeichnet, daß man Flach- oder Röhrenmembranen herstellt.

14. Verfahren zur Konzentrierung und/oder Reinigung von Lösungen oder zur Trennung von Komponenten, die in diesen Lösungen gelöst sind, dadurch gekennzeichnet, daß man auf einer Seite einer Membran nach einem der Ansprüche 1 bis 10 eine Lösung mit gelösten Komponenten vorlegt und dann bei einem hydraulischen Druck, der größer als der osmotische Druck der Lösung ist, das Verfahren durchführt.

15. Verwendung der Membran nach einem der Ansprüche 1 bis 10 zur Trennung einwertiger Ionen niedrigen Ionengewichts von vorzugsweise mehrwertigen Ionen mit niedrigem oder höherem Ionengewicht und einwertigen Ionen mit höherem Ionengewicht.

16. Verwendung der Membran nach einem der Ansprüche 1 bis 10 zur Trennung von ionogenen Substanzen von nicht-ionogenen Substanzen.

17. Verwendung der Membran nach einem der Ansprüche 1 bis 10 zur Trennung entgegengesetzt geladener Ionen.

18. Verfahren zum Trennen von Substanzen, dadurch gekennzeichnet, daß man wässerige Lösungen von Substanzmischungen durch eine Membran nach einem der Ansprüche 1 bis 10 fließen läßt.

**Claims**

1. A porous, semipermeable cellulose acetate membrane being modified by ionisable groups, characterized in that it consists of

a) a cellulose acetate containing membrane (component (A)), having at the surface pores with a diameter of 10 to 1000 Å before modification, to which, via
b) at least one bridge member, derived from an organic compound (component (B)) containing at least two functional groups,
c) at least one polyfunctional, linear or branched oligomer or polymer (component (C)), is bonded, which in turn is further reacted with
d) compounds (component (D)) containing ionisable groups.

2. A membrane according to claim 1, characterized by an acetate content of the cellulose acetate membrane (component (A)) of 36 to 41% by weight.

3. A membrane according to claim 1, characterized in that the bridge member is derived from a cyclic carbonic acid-imide, or from compounds containing isocyanate, isothiocyanate or N-methylol groups.

4. A membrane according to claim 1, characterized in that the polyfunctional component (C) contains aliphatic or aromatic amino groups, hydroxyl groups or thiol groups.

5. A membrane according to claim 4, characterized in that component (C) is a polyethylene imine, a polyvinyl alcohol, a polyvinylamine, a vinylamine/vinylsulfonate copolymer or a polyvinylaniline.

6. A membrane according to claim 1, characterized in that component (D) contains sulfonic acid

groups, carboxylic acid groups or ammonium groups as ionisable groups.

7. A membrane according to claim 6, characterized in that component (D) is a reactive azo dyestuff containing sulfonic acid groups, carboxylic acid groups or ammonium groups.

8. A membrane according to any one of claims 1 to 7, characterized in that the membrane is present as a thin superficial film on a microporous support in form of a composite membrane.

9. A membrane according to claim 8, characterized in that the microporous support contains polyolefines, polyacrylonitriles, polyamides, polysulfones or cellulosic materials.

10. A membrane according to claim 8, characterized in that the semipermeable superficial film has a thickness of at least 0.5 micron.

11. A process for the manufacture of a porous, semipermeable modified cellulose acetate membrane according to claim 1, characterized by reacting

a) a cellulose acetate containing membrane (component (A)), having at the surface pores with a diameter of 10 to 1000 Å, with
b) an organic compound (component (B)) containing at least one group capable of reaction with the hydroxyl groups of the membrane and at least one group capable of reaction with component (C), the procedure being such that the reaction product obtained from components (A) and (B) still has at least one reactive group, then with
c) a polyfunctonal, linear or branched oligomer or polymer (component (C)), and further with
d) a compound (component (D)) containing at least one ionic group and at least one group capable of reaction with component (C)).

12. A process according to claim 11, characterized in that a semipermeable composite membrane is manufactured by casting on one surface of a microporous support an organic solution of cellulose acetate, simultaneously passing a stream of air of ambient temperature over the cast layer in order to evaporate the solvent, drying the layer, repeating said steps at least once, and treating the membrane then in an aqueous alkaline solution and modifying the composite membrane by reacting it with components (B), (C) and (D).

13. A process according to any one of claims 11 or 12, characterized in that flat or tubular membranes are manufactured.

14. A process for concentrating and/or purifying solutions or separating of components dissolved in these solutions, characterized by disposing on one side of a semipermeable membrane according to any one of claims 1 to 10 a solution with diluted components and carrying out the process by applying a hydraulic pressure greater than the osmotic pressure of said solution.

15. Use of the membranes according to any one of claims 1 to 10 for separating monovalent ions of low ionic weight from preferably polyvalent ions of low or relatively high ionic weight and monovalent ions of relatively high ionic weight.

16. Use of the membranes according to any one of claims 1 to 10 for separating ionic substances from non-ionic substances.

17. Use of the membranes according to any one of claims 1 to 10 for separating ionic substances of opposite charge.

18. A process for separating of substances, characterized in that aqueous solutions of mixtures of substances are effected to flow over a membrane according to any one of claims 1 to 10.

**Revendications** .

1. Membrane d'acétate de cellulose poreuse et semi-perméable, modifiée par des groupes ionisables, caractérisée en ce que:

a) elle comprend une membrane — composant (A) — contenant de l'acétate de cellulose, qui présente avant la modification des pores en surface ayant un diamètre de 10 à 1000 Å, à laquelle, par
b) au moins une branche de pont, dérivée d'un composé organique — composant (B) — ayant au moins deux groupes fonctionnels;
c) est lié au moins un polymère ou oligomère — composant (C) — linéaire ou ramifié, polyfonctionnel qui, à son tour,
d) est traité ensuite avec des composés — composants (D) — contenant des groupes ionisables.

2. Membrane selon la revendication 1, caractérisée en ce que la teneur en acétate de la membrane d'acétate de cellulose — composant (A) — atteint de 36 à 41% en poids.

3. Membrane selon la revendication 1, caractérisée en ce que la branche de pont dérive d'un imidohaloimidohalogenure d'acide carbonique cyclique ou de composés qui renferment les groupes isocyanates isothiocyanates ou N-méthylol.

4. Membrane selon la revendication 1, caractérisée en ce que le composant (C) polyfonctionnel

présente des groupes aliphatiques ou aromatiques amino, hydroxyle, ou thiol.

5.Membrane selon la revendication 4, caractérisée en ce que le composant (C) est une polyéthylèneamine, de l'alcool polyvinylique, une polyvinylamine, un copolymère de vinylamine/sulfonate de vinyle ou une polyvinylaniline.

6. Membrane selon la revendication 1, caractèrisée en ce que le composant (D) renferme à titre de groupes ionisables, des groupes sulfoniques, carboxyle ou ammonium.

7. Membrane selon la revendication 6, caractérisée en ce que le composant (D) est un colorant azoique qui renferme des groupes sulfoniques, carboniques ou ammonium.

8. Membrane selon l'une des revendications 1 à 7, caractérisée en ce qu'elle se trouve sous forme d'une membrane composite en tant que pellicule superficielle plus mince sur un support microporeux.

9. Membrane selon la revendication 8, caractérisée en ce que le support microporeux renferme une polyoléfine, un polyacrylonitrile, un polyamide, une polysulfone ou des matériaux cellulosiques.

10. Membrane selon la revendication 8, caractérisée en ce que la pellicule superficielle semi-perméable présente une épaisseur d'au moins 0,5 μ.

11. Procédé pour la fabrication d'une membrane d'acétate de cellulose poreuse, semi-perméable modifiée, selon la revendication 1, caractérisé en ce que:

a) l'on fait réagir une membrane — composant (A) — contenant de l'acétate de cellulose qui présente à la surface des pores ayant un diamètre de 10 à 1000 Å, avec
b) un composé organique — composant (B) — offrant au moins un groupe qui réagit avec les groupes hydroxyle de la membrane et au moins un groupe qui réagit avec le composant (C), en procédant de telle sorte que le produit de réaction des composants (A) et (B) présente au moins encore un groupe réactif, puis que l'on traite avec
c) un polymère ou oligomère — composant (C) — polyfonctionnel linéaire ou ramifié et ensuite avec
d) un composé — composant (D) — qui renferme au moins un groupe ionique et au moins un groupe qui réagit avec le composant (C).

12. Procédé selon la revendication 11, caractérisé en ce que l'on fabrique une membrane composite semiperméable en versant sur une surface d'un support microporeux une solution organique d'acétate de cellulose tandis qu'est envoyé simultanément un courant d'air à la température ambiante sur la couche versée pour chasser le solvant, en séchant ensuite la couche résultante, en répétant au moins une fois l'unique étape du procédé, en traitant ensuite la membrane dans une solution alcaline aqueuse et en réalisant après la modification avec les composants (B), (C) et (D).

13. Procédé selon la revendication 11 ou 12, caractérisé en ce que l'on fabrique des membranes plates ou tubulaires.

14. Procédé pour la concentration et/ou la purification de solutions ou pour la séparation de composants qui sont dissous dans ces solutions, caractérisé en ce que l'on présente sur une face d'une membrane selon l'une des revendications 1 à 10, une solution avec des composants dissous et qu'ensuite, avec une pression hydraulique qui est supérieure à la pression osmotique de la solution, on effectue le procédé.

15. Utilisation de la membrane selon l'une des revendications 1 à 10, pour la séparation d'ions monovalents de faible poids ionique, de préférence d'ions multivalents ayant un poids ionique faible ou supérieur et d'ions monovalents ayant un poids ionique supérieur.

16. Utilisation de la membrane selon l'une des revendications 1 à 10, pour la séparation de substances ionogènes de substances non-ionogènes.

17. Utilisation de la membrane selon l'une des revendications 1 à 10, pour la séparation d'ions de charges opposées.

18. Procédé pour la séparation de substances, caractérisé en ce qu'on fait s'écouler des solutions aqueuses de mélanges de substances à travers une membrane selon l'une des revendications 1 à 10.